(19) Europäisches Patentamt European Patent Office Office européen des brevets

(11) **EP 2 099 846 B1**

(12) **FASCICULE DE BREVET EUROPEEN**

(45) Date de publication et mention de la délivrance du brevet:
**27.06.2018 Bulletin 2018/26**

(21) Numéro de dépôt: **07870387.3**

(22) Date de dépôt: **05.12.2007**

(51) Int Cl.:
*C08G 81/02* (2006.01)    *A63B 37/00* (2006.01)
*C08G 63/00* (2006.01)    *C08G 69/00* (2006.01)
*C08G 69/40* (2006.01)    *C08G 69/44* (2006.01)
*C08G 81/00* (2006.01)

(86) Numéro de dépôt international:
**PCT/FR2007/052444**

(87) Numéro de publication internationale:
**WO 2008/071894 (19.06.2008 Gazette 2008/25)**

(54) **COPOLYMERE A BLOCS POLYAMIDE, POLYESTER ET POLYETHER**

POLYAMID-, POLYESTER- UND POLYETHER-BLOCKCOPOLYMER

POLYAMIDE, POLYESTER AND POLYETHER BLOCK COPOLYMER

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **08.12.2006 FR 0655385**
**28.08.2007 FR 0757223**

(43) Date de publication de la demande:
**16.09.2009 Bulletin 2009/38**

(73) Titulaire: **ARKEMA FRANCE**
**92700 Colombes (FR)**

(72) Inventeur: **MALET, Frédéric**
**76000 Rouen (FR)**

(56) Documents cités:
• UKIELSKI R: "New multiblock terpoly(ester-ether-amide) thermoplastic elastomers with various chemical composition of ester block" POLYMER, ELSEVIER SCIENCE PUBLISHERS B.V, GB, vol. 41, no. 5, mars 2000 (2000-03), pages 1893-1904, XP004244182 ISSN: 0032-3861
• GILBERT M ET AL: "Effect of chemical structure on crystallization rates and melting of polymers: 2. Aliphatic polyesters", POLYMER, ELSEVIER SCIENCE PUBLISHERS B.V, GB, vol. 15, no. 7, 1 July 1974 (1974-07-01), pages 407-412, XP024115515, ISSN: 0032-3861, DOI: 10.1016/0032-3861(74)90102-5 [retrieved on 1974-07-01]

**Description**

La présente invention porte sur un nouveau copolymère comprenant des blocs polyamide, des blocs polyéther et des blocs polyester.

Les blocs polyamide sont connus pour être des segments dits rigides à température de fusion (Tf) ou température de transition vitreuse (Tg) plus élevées que la température d'utilisation du polymère tandis que les blocs polyéther ou polyester sont des segments dits souples à Tf ou Tg moins élevées que la température d'utilisation dudit polymère.

Dans le document US20040158027, il est question de copolyesteramide ayant une température de transition vitreuse inférieure ou égale à 0°C comprenant (i) au moins un segment dur comprenant au moins une fonction amide et (ii) au moins un segment mou, comprenant au moins une fonction ester, formé d'au moins un dimère d'acide gras et/ou un dimère de diol gras. Le copolymère comprend moins de 15%, de préférence moins de 10%, avantageusement moins de 5% et plus particulièrement moins de 2% d'éther ou groupes éther. Selon un mode de réalisation préféré, le copolymère ne comprend aucun groupe éther et consiste exclusivement en un copolymère avec des blocs dur de polyamide et des blocs mous de polyester. Ce copolymère est particulièrement utile en tant qu'adhésif thermofusible.

Le document US5703177 est relatif à un copolyester-polyamide bloc comprenant au moins un bloc polyester (PES) ou un bloc copolyester (coPES) et un bloc polyamide ou copolyamide (coPA) permettant de fabriquer des articles moulés biologiquement biodégradables et compostables, utiles dans le domaine de l'emballage, des produits d'hygiène et des produits médicaux.

Dans le document US 5,253,871, il est question de polyétheresteramides obtenus et décrits dans FR 2,273,021. Ces produits sont des copolymères formés de blocs polyamide et de blocs polyéther, les blocs polyamide et les blocs polyéther étant reliés par une fonction ester. Ces produits sont vendus sous le nom commercial PEBAX® par la société ARKEMA. Ce document ne décrit pas de copolymères comprenant des blocs polyesters.

Les copolymères à blocs polyamide (abrégé ci-dessous PA), à blocs polyéther (abrégé ci-dessous PE) et à blocs polyester (abrégé ci-dessous PES) résultent de la copolycondensation de blocs polyamide à extrémités réactives avec des blocs polyéther et des blocs polyester à extrémités réactives. Par exemple, on peut faire réagir :

- du polyéther diol, du polyester diol et un polyamide diacide carboxylique ;
- de la polyétherdiamine, du polyesterdiol et un polyamide diacide carboxylique,
- de la polyétherdiamine, de la polyesterdiamine et un polyamide diacide carboxylique,
- du polyétherdiol, de la polyesterdiamine et un polyamide diacide carboxylique,
- du polyéther diacide carboxylique, de la polyesterdiamine et un polyamide diamine,
- du polyéther diacide carboxylique, du polyesterdiol et un polyamide diamine,
- du polyétherdiol, du polyesterdiacide carboxylique et un polyamide diamine,
- de la polyétherdiamine, du polyesterdiacide carboxylique et un polyamide diamine.

Les blocs polyamides à bouts de chaînes dicarboxyliques proviennent par exemple de la condensation de précurseurs de polyamides en présence d'un diacide carboxylique régulateur de chaîne.

Les blocs polyamides à bouts de chaînes diamine proviennent par exemple de la condensation de précurseurs de polyamides en présence d'une diamine régulatrice de chaîne.

Les polymères à blocs PA, à blocs PE et à blocs PES peuvent aussi comprendre des motifs répartis de façon aléatoire. Lesdits polymères peuvent être préparés par la réaction simultanée des blocs PE, des blocs PES et des précurseurs des blocs PA. De préférence, lesdits polymères sont préparés par la réaction simultanée des blocs PE et des précurseurs des blocs PA puis ajout des blocs PES pour minimiser les réactions d'échanges entre blocs PA et blocs PES.

On obtient un polymère ayant essentiellement des blocs PE, des blocs PES et des blocs PA de longueur très variable dépendant du moment au cours duquel le régulateur de chaîne intervient durant la formation du bloc PA, mais aussi les différents réactifs ayant réagi de façon aléatoire qui sont répartis de façon aléatoire (statistique) le long de la chaîne polymère.

On a avantageusement deux types possibles de blocs PA dans les copolymères selon l'invention. Le bloc polyamide peut être constitué soit d'une structure « homopolyamide » issue de la polymérisation d'un seul monomère à savoir un seul lactame, un seul aminoacide ou un seul couple (acide dicarboxylique.diamine) ou soit d'une structure type « copolyamide » issue de la polymérisation d'un mélange d'au moins deux monomères pris parmi les trois types cités précédemment.

Les blocs polyamides sont obtenus en présence d'un acide dicarboxylique ou d'une diamine, régulateur de chaîne, suivant que l'on souhaite des blocs polyamides respectivement à extrémités acide carboxylique ou amine. Si les précurseurs comprennent déjà un acide dicarboxylique ou une diamine, il suffit par exemple de l'utiliser en excès mais on peut aussi utiliser un autre acide dicarboxylique ou une autre diamine pris dans les groupes d'acides dicarboxyliques et de diamines définis ci-dessous.

La Société déposante a maintenant découvert que la présence d'une certaine quantité de blocs PES dans le ou les segments mous d'un copolymère à blocs polyamide et blocs polyéther (abrégé PEBA) permet d'avoir des propriétés intéressantes en terme de rigidification à froid des grades souples, de densité, de résistance à l'hydrolyse (reprise en eau plus faible) et de résistance au vieillissement (thermo-oxydation et UV).

La présente invention a donc pour objet un copolymère comprenant des blocs polyamide, des blocs polyester et des blocs polyéther de formule générale :

$$(I) \qquad -[BD - BM]_n-$$

et dans laquelle :

- BD ou Bloc Dur est une séquence polymérique comprenant au moins un bloc polyamide (bloc PA),
- BM ou Bloc Mou est une séquence polymérique comprenant au moins un bloc polyéther (bloc PE) et au moins un bloc polyester (bloc PES),
- n représente le nombre d'unités -BD-BM- dudit copolymère, n allant de 1 jusqu'à une moyenne de 60,

caractérisé en ce que le pourcentage en poids de blocs PA dans le copolymère est inférieur à 85%, le pourcentage en poids des blocs PE dans le copolymère est strictement supérieur à 15% et que lesdits blocs PES ont une température de transition vitreuse Tg inférieure à 10°C, les blocs PES sont issus de la polycondensation entre un diol et un acide dicarboxylique, à l'exception des acides téréphthaliques et isophthaliques,
les blocs polyamide sont choisis parmi les PA 6, PA 11, PA 12 et les blocs PA 4.6, PA 4.12, PA 4.14, PA 4.18, PA 6.6, PA 6.10, PA 6.12, PA 6.14, PA 6.18, PA Pip10, PA9.6, PA 9.12, PA 10.10, PA 10.12, PA 10.14, PA 10.18, PA 6/11 et PA11/12,
le bloc PE est choisi parmi le polyéthylène glycol (PEG), le propylène glycol (PPG), le polytriméthylène glycol (PO3G), le polytétraméthylène glycol (PTMG), le poly(3MeTHF), et leurs copolymères à blocs ou statistiques,
l'acide dicarboxylique est un acide gras dimérisé.
Le pourcentage en poids des blocs polyéther dans le copolymère est strictement supérieur à 15%, de préférence > 20%, avantageusement > 30%, encore plus avantageusement > 40%, Lesdits blocs polyester ont une température de transition vitreuse $T_g$ inférieure à 10°C, de préférence < 0°C, avantageusement < -10°C, encore plus avantageusement < -20°C, idéalement < -30°C,
Le pourcentage en poids de blocs PA est strictement inférieur à 85%, de préférence < 70%, avantageusement < 50%, de façon encore plus avantageuse < 30%.n va de 1, étant en particulier d'au moins 5, de façon davantage préférée d'au moins 6, et allant jusqu'à une moyenne de 60, de façon préférée jusqu'à une moyenne de 30, de façon davantage préférée jusqu'à une moyenne de 25.

Selon un mode de réalisation, le copolymère est caractérisé en ce que la masse moléculaire moyenne en nombre des blocs polyamide est comprise entre 500 et 10 000 g/mole, de préférence entre 600 et 6 000 g/mole.

Selon un mode de réalisation, le copolymère est caractérisé par le fait que la masse moléculaire moyenne en nombre des blocs polyéther est comprise entre 100 et 5000 g/mole, de préférence entre 200 et 3000 g/mole.

Selon un mode de réalisation, le copolymère est caractérisé par le fait que la masse moléculaire moyenne en nombre des blocs polyester est comprise entre 800 et 5000 g/mole, de préférence entre 1000 et 3500 g/mole.

Selon un mode de réalisation, le copolymère est caractérisé par le fait que sa masse moléculaire moyenne en nombre est > 6000 g/mole, de préférence >10000g/mole, encore plus avantageusement >15000g/mole.

Les blocs PA peuvent être à extrémités acide carboxyliques, on parle alors de PA acide dicarboxylique ou alors ils peuvent être à extrémité amine, on parle de PA diamine. Les liaisons entre les blocs PA et les blocs mous (BM) peuvent donc être des liaisons ester ou alors des liaisons amide.

Les blocs polyamide peuvent être constitués :

(i) d'une structure homopolyamide issue de la polymérisation (a) d'un lactame, en particulier d'un lactame en $C_4$-$C_{12}$, (b) d'un aminoacide, en particulier d'un aminoacide en $C_4$-$C_{12}$, (c) d'un couple (acide dicarboxylique.diamine) qui est un produit de condensation d'un acide dicarboxylique aliphatique ou aromatique, de préférence un acide dicarboxylique aliphatique linéaire ou ramifié en $C_2$-$C_{40}$, de préférence en $C_6$-$C_{36}$, encore plus préférentiellement en $C_6$ - $C_{18}$ et d'une diamine aliphatique en C2-C40, linéaire ou ramifié, ou alors d'une diamine cyclique en C2-C40, aromatique, semi-aromatique ou non aromatique ou;
(ii) d'une structure copolyamide issue de la polymérisation d'un mélange d'au moins deux parmi (a), (b) et (c).

A titre d'exemples de lactames, on peut citer le caprolactame, l'oenantholactame et le lauryllactame.

A titre d'exemples d'aminoacides, on peut citer les acides aminocaproïque, amino-7-heptanoïque, amino-11-undécanoïque et amino-12-dodécanoïque.

A titre d'exemples d'acides dicarboxyliques, on peut citer (i) les acides aliphatiques tels que l'acide 1,4-cyclohexyldicarboxylique, les acides butanedioïque, adipique, azélaïque, subérique, sébacique, pimélique, 1,7-heptanedioïque, 1,8-octanedioïque, 1,9-nonanedioïque, 1,10-décanedioïque, 1,11-undécanedioïque, 1,12-dodécanedicarboxylique, 1,14-tétradécanedicarboxylique, 1,18-octadécanedicarboxylique, (ii) les acides dicarboxyliques aromatiques tels que les acides téréphthalique et isophthalique, mais aussi (iii) les acides gras dimérisés.

Les acides dicarboxyliques peuvent être des dimères d'acides gras en $C_{10}$-$C_{30}$, encore plus préférentiellement en $C_{12}$-$C_{24}$, avantageusement en $C_{14}$-$C_{22}$ et plus spécialement des dimères d'acides gras à chaîne alkyl en $C_{18}$. Des dimères d'acides gras appropriés sont des produits de dimérisation de deux acides gras, identiques ou différents, choisis parmi l'acide oléique, linoléique, linolénique, palmitoléique et l'acide elaidique. Les produits de dimérisation de mélange d'acides gras insaturés peuvent être obtenus par l'hydrolyse d'huiles ou graisses végétales, par exemple huile de tournesol, huile de graines de soja, huile d'olive, huile de graines de colza, huile de graines de coton. Les dimères d'acides gras hydrogénés, par exemple en utilisant des catalyseurs au nickel, peuvent aussi être utilisés. Concernant la diamine, elle est choisie parmi :

- les diamines aliphatiques, linéaires ou ramifiées ; et
- les diamines cycliques, aromatiques, semi-aromatiques ou non aromatiques.

A titre d'exemples de diamines, on peut citer la 1,4-tétraméthylènediamine, la 1,6-hexaméthylènediamine, la 1,9-nonaméthylènediamine, la 1,12-dodécaméthylènediamine, la triméthylhexaméthylène diamine, les isomères de bis-(3-méthyl-4-aminocyclohexyl)méthane (BMACM), le paraaminodicyclohexyl méthane (PACM), les isomères de 2-2-bis-(3-méthyl-4-aminocyclohexyl)-propane (BMACP), les isomères de bis(4-aminocyclohexyl)-méthane (BACM), le 2,2-bis(3-méthyl-4-aminocyclohexyl)propane (BMACP), le 2,6-bis(aminométhyl)norbornane (BAMN), le para-amino-di-cyclo-hexyl-méthane (PACM), l'isophoronediamine (IPDA), m-xylène diamine (MXD) et la pipérazine (Pip).

En particulier, les blocs PA sont choisis parmi les blocs PA 6, PA 11, PA 12 et les blocs PA 4.6, PA 4.12, PA 4.14, PA 4.18, PA 6.6, PA 6.10, PA 6.12, PA 6.14, PA 6.18, PA Pip10, PA9.6, PA 9.12, PA 10.10, PA 10.12, PA 10.14, PA 10.18, PA 6/11 et PA11/12.

Les blocs PE sont des polyalkylènes éther polyol, notamment des polyalkylènes éther diol. Les blocs PE sont choisis parmi le polyéthylène éther glycol (PEG), le polypropylène éther glycol (PPG), le polytétraméthylène éther glycol (PTMG), le polyhexaméthylène éther glycol, le polytriméthylèneéther glycol (PO3G), le poly(3-alkyl tétrahydrofuranne) en particulier le poly(3-méthyltétrahydrofuranne (poly(3MeTHF)) et leurs copolymère à blocs ou statistiques. On peut également envisager un bloc PE de type «copolyéthers» contenant un enchaînement d'au moins deux blocs PE cités ci-dessus.

Les fins de chaînes des blocs PE peuvent être diOH, diNH2, diisocyanate ou diacide suivant leur procédé de synthèse.

Les blocs PE à bouts de chaîne $NH_2$, peuvent être obtenues par cyanoacétylation de séquences polyoxyalkylène alpha-oméga dihydroxylées aliphatiques appelées polétherdiols telles que les Jeffamines® D400, D2000, ED2003 et XTJ 542 de la société Huntsman.

Les blocs PES sont habituellement fabriqués par polycondensation entre un acide dicarboxylique et un diol. Les acides carboxyliques appropriés comprennent ceux mentionnés ci-dessus utilisés pour former les blocs polyamide à l'exception des acides téréphthaliques et isophthaliques. Les diols appropriés comprennent les diols aliphatiques linéaires tel que l'éthylène glycol, le 1,3-propylène glycol, le 1,4-butylène glycol, le 1,6-hexylène glycol, les diols branchés tel que le néopentylglycol, le 3-méthylpentane glycol, le 1,2-propylène glycol, et les diols cycliques tel que le 1,4-bis(hydroxyméthyl)cyclohexane et le 1,4-cyclohexane-diméthanol. On préfère les PES à base de dimères d'acide gras, en particulier les produits de la gamme PRIPLAST® de la société Uniqema.

La présente invention porte aussi plus particulièrement sur l'utilisation d'un copolymère de formule (I) tel que défini ci-dessus, à l'exclusion de son utilisation en tant qu'adhésif thermofusible ou «hot melt adhesive». Le copolymère selon l'invention peut être utilisé seul ou en tant qu'additif. Il peut servir à fabriquer, en tout ou partie, des articles façonnés, tel que des fibres, des tissus, des films, des feuilles, des joncs, des tubes, des pièces injectées.

Les articles ou éléments d'articles fabriqués avec les copolymères selon l'invention font avantageusement partie du domaine du sport. Ce sont des éléments de chaussure de sport, des ustensiles de sport tel que patins à glace, fixations de skis, raquettes, battes de sports, planches, fers à cheval, palmes, balles de golf, des articles de loisirs, de bricolage, des outils ou équipements de voirie soumis aux agressions climatiques et mécaniques, des articles de protection tel que visières de casques ou casquette, lunettes, branches de lunettes, des éléments de véhicules (en particulier de scooters, cyclomoteurs, motos, voitures, vélos) tels que protège-phares, rétroviseurs, petite pièce de voiture tout terrain, réservoirs, bande de courroie transporteuse.

Un certain nombre de brevets ou demandes de brevets dont US 4,858,924 et US 4,919,434, dans le domaine des balles de golf, font état de matériaux polyamides élastomériques utilisés pour fabriquer les couches externes ou intermédiaires d'une balle de golf. Cependant, notre copolymère selon l'invention n'est pas décrit dans ces documents.

Pour une application « balle de golf », pour fabriquer aussi bien le coeur que le revêtement externe de ladite balle, ainsi que les éventuelles couches intermédiaires entre ledit coeur et ledit revêtement externe, on peut utiliser le copolymère selon l'invention en tout ou partie.

Dans le cas où le copolymère selon l'invention serait utilisé en partie, on peut utiliser comme autre composant au moins un ionomère, lequel est sélectionné dans le groupe des produits de type oléfines (en particulier les copolymères d'une oléfine et d'un acide carboxylique insaturé de type alpha, béta éthylénique dans lequel au moins une partie des groupes acides carboxyliques sont neutralisés par des ions métalliques), polyester, copoly(éther-ester), copoly(ester-ester), polyamide, polyéthers, polyuréthanes, polyacrylate, polystyrène, SBS, SEBS et polycarbonate (homopolymère, copolymère et copolymère blocs) tels que décrit dans US 6,187,864. On peut citer comme ionomères les SURLIN® (en particulier les SURLIN® de type magnésium ionomères, lithium ionomères, sodium ionomères et zinc ionomères) et NAFION® de DUPONT DE NEUMOURS et les IOTEK® d'EXXON.

L'avantage du copolymère selon l'invention permet de diminuer la reprise en humidité de la balle et d'éviter l'impacte négatif d'une telle reprise sur ses propriétés mécaniques qui peuvent être entre autre, aptitude à la compression, aptitude à atteindre une vitesse de départ élevée, aptitude à améliorer le coefficient de restitution.

Le copolymère selon l'invention peut être utilisé dans des compositions qui peuvent, en outre, comprendre : des colorants, des agents de blanchiment des absorbeurs d'UV, des antioxydants, des stabilisants, des agents assouplissants, des plastifiants, des modifiants chocs, des agents renforçant, des agents nucléants et leurs mélanges.

L'invention va maintenant être exemplifiée. Ci-dessous, le PRIPLAST® 1838 désigne un polyester diol commercialisé par la société Uniqema.

**Conditions expérimentales:**

Des échantillons de Comp1, Comp2 et Ex1 ont été découpés en demi-cercle d'épaisseur indiquée dans le tableau 1 ci-dessous. Ils ont ensuite été séchés jusqu'à poids constant dans une étuve à 40°C. On a ensuite procédé à la mesure de reprise en eau à 23°C desdits échantillons selon le principe détaillé ci dessous.

**Principe**

On immerge les échantillons séchés dans un cristallisoir (1 échantillon par cristallisoir) rempli d'eau distillée à une température régulée de 23°C. Les échantillons ont une surface de 867mm$^2$ (diamètre = 4,7cm). Les échantillons sont pesés régulièrement après un essuyage rapide de leur surface. On suit donc la prise de poids des échantillons immergés dans l'eau. En supposant le modèle Fickéen applicable, la relation suivante valable aux temps courts permet d'obtenir le coefficient de diffusion à partir de la pente de la courbe $M(t)/M(\infty)=f(\sqrt{t})$ :

$$\frac{M(t)}{M(\infty)} = 4\sqrt{\frac{Dt}{\pi e^2}}$$

où

M(t) est la quantité d'eau absorbée à t
M(∞) la quantité d'eau absorbée à l'équilibre
D coefficient de diffusion
e épaisseur de l'échantillon

**Rigidification à froid**

On appelle rigidification le rapport de module E'(T°C)/E'(23°C). La **figue 1** ci-dessous permet de voir l'évolution de ce rapport en fonction de la température.

➢ **Préparation du Polyamide 12 diacide carboxylique**

Dans un réacteur autoclave, on introduit 1200 g de lactame 12 et 386,39g d'acide adipique avec 7% en poids d'eau, avant inertage sous azote. On monte la température à 270°C puis on maintient cette température pendant 2h, la pression atteinte est alors de 23 bars. On opère ensuite la détente jusqu'à pression atmosphérique et on continue la réaction à cette pression et sous balayage d'azote pendant 30 minutes avant de sortir l'oligomère du réacteur. Une analyse potentiométrique des fins de chaînes indique que la masse molaire du polyamide 12 diacide est de 630 g/mol.

➤ **Comp 1**

Dans un réacteur en verre, on introduit 15 g de polyamide 12 diacide de masse molaire 630 g/mol précédemment préparé et 50 g de PTMG 2000. On place le réacteur dans un bain d'huile à 250 °C. Une fois le mélange complètement fondu, on passe sous une agitation de 125tr/min pendant 60 minutes. Ensuite, on effectue une mise sous vide du réacteur pendant environ 10 minutes pour atteindre un vide d'environ 5 mbars. 0,3% en poids de catalyseur $Zr(OBu)_4$ est ensuite ajouté *via* une solution dans le toluène. L'agitation est portée à 250 tr/min. L'avancement de la réaction est suivi par l'évolution du couple d'entraînement. Au bout de 6 minutes, on diminue l'agitation à 50 tr/min, puis la réaction est stoppée deux minutes plus tard.

➤ **Comp2**

Le copolymère est réalisé dans les mêmes conditions que précédemment mais en utilisant 15g de polyamide 12 diacide précédemment obtenu et 50g de Priplast 1838.

➤ **Ex1**

Le copolymère est réalisé dans les mêmes conditions que pour le comp1 mais en utilisant 15g de polyamide 12 diacide, 25g de PTMG 2000 et 25g de Priplast 1838.

➤ **Ex 2**

Le copolymère est réalisé dans les mêmes conditions que pour le comp1 mais en utilisant 12g de polyamide 12 diacide, 26g de PTMG 2000 et 14g de Priplast 1838.

**TABLEAU 1**

| Essai | BD | | BM | | DSC 2ème chauffe | % absorption eau à l'équilibre à 25 °C | Densité |
| | Nature | Mn (g/mol) | Nature | Mn (g/mol) | (°C) | | |
|---|---|---|---|---|---|---|---|
| Comp 1 | PA 12 | 630 | PTMG | 2000 | Tf1=12,1 Tf2=136,9 Tg= -73,2 | 1,3 (1944*) | 1,003 |
| Comp 2 | | | Priplast® 1838 | | Tf1=sans Tf2=124,3 Tg= -53,1 | 0,52 (1934*) | - |
| Ex1 | | | PTMG 2000 / Priplast® 1838 50/50 | | Tf1=3,2 Tf2=128,0 Tg= -70,3 | 0,6 (1954*) | 0,989 |
| Ex2 | | | PTMG 2000/ Priplast® 1838 65/35 | | Tf1=8,3 Tf2=135,8 Tg= -72 | 0,4 (1887*) | - |
| * Epaisseur en μm des échantillons pour la mesure de reprise en humidité | | | | | | | |

**Résultats**

Le copolymère de **l'Ex1** absorbe moins d'eau que le copolymère du **Comp1.** La résistance à l'hydrolyse sera donc meilleure. On constate également pour le copolymère de **l'Ex1** selon l'invention que l'utilisation d'un mélange de bloc polyéther et de bloc polyester diminue légèrement la densité par rapport à celle du copolymère du **Comp1** qui ne contient qu'un bloc polyéther. On observe également que le point de fusion de la phase souple (Tf1) du copolymère de **l'Ex1** est plus faible que celle du copolymère du **Comp1.**

En ce qui concerne la rigidification à froid, c'est à dire l'évolution du rapport de module lorsque la température diminue en partant de 23°C, on voit bien que pour le copolymère du **Comp2,** à base de bloc polyester pur, l'évolution est beaucoup moins importante que pour le copolymère du **Comp1**, à base de bloc PTMG pur. De façon remarquable, un mélange équimolaire PTMG / Priplast comme le copolymère de **l'Ex1**, a aussi, par rapport au copolymère du **Comp1**, une rigidification moins importante lorsque la température diminue, et ce à iso rapport massique PA / PE.

**Revendications**

1. Copolymère segmenté à blocs de formule générale :

(I)       -[BD - BM]$_n$-

dans laquelle :

 • BD ou Bloc Dur est une séquence polymérique comprenant au moins un bloc polyamide (bloc PA),
 • BM ou Bloc Mou est une séquence polymérique comprenant au moins un bloc polyéther (bloc PE) et au moins un bloc polyester (bloc PES),
 • n représente le nombre d'unités -BD-BM- dudit copolymère, n allant de 1 jusqu'à une moyenne de 60,

**caractérisé en ce que** le pourcentage en poids de blocs PA dans le copolymère est inférieur à 85%, le pourcentage en poids des blocs PE dans le copolymère est strictement supérieur à 15% et que lesdits blocs PES ont une température de transition vitreuse $T_g$ inférieure à 10°C, les blocs PES sont issus de la polycondensation entre un diol et un acide dicarboxylique, à l'exception des acides téréphthaliques et isophthaliques,
les blocs polyamide sont choisis parmi les PA 6, PA 11, PA 12 et les blocs PA 4.6, PA 4.12, PA 4.14, PA 4.18, PA 6.6, PA 6.10, PA 6.12, PA 6.14, PA 6.18, PA Pip10, PA9.6, PA 9.12, PA 10.10, PA 10.12, PA 10.14, PA 10.18, PA 6/11 et PA11/12,
le bloc PE est choisi parmi le polyéthylène glycol (PEG), le propylène glycol (PPG), le polytriméthylène glycol (PO3G), le polytétraméthylène glycol (PTMG), le poly(3MeTHF), et leurs copolymères à blocs ou statistiques,
l'acide dicarboxylique est un acide gras dimérisé.

2. Copolymère selon la revendication 1, **caractérisé en ce que** le pourcentage en poids des blocs PE dans le copolymère est > 20%, de préférence > 30%, avantageusement > 40%.

3. Copolymère selon la revendication 1, **caractérisé en ce que** le pourcentage en poids de blocs PA est < 70%, avantageusement < 50%, de façon encore plus avantageuse < 30%.

4. Copolymère selon l'une des revendications précédentes, **caractérisé en ce que** les blocs PES ont une $T_g$ < 0°C, de préférence < -10°C, avantageusement < -20°C, encore plus avantageusement < -30°C.

5. Copolymère selon l'une des revendications 1 à 4, **caractérisé en ce que** les blocs PA sont à extrémités carboxyliques.

6. Copolymère selon l'une des revendications 1 à 4, **caractérisé en ce que** les blocs PA sont à extrémités amine.

7. Copolymère selon l'une des revendications précédentes, **caractérisé en ce que** la masse moléculaire moyenne en nombre des blocs polyamide est comprise entre 500 et 10 000 g/mole, de préférence entre 600 et 6 000 g/mole.

8. Copolymère selon l'une des revendications précédentes, **caractérisé par le fait que** la masse moléculaire moyenne en nombre des blocs polyéther est comprise entre 100 et 5000 g/mole, de préférence entre 200 et 3000 g/mole.

9. Copolymère selon l'une des revendications précédentes, **caractérisé par le fait que** la masse moléculaire moyenne en nombre des blocs polyester est comprise entre 800 et 5000 g/mole, de préférence entre 1000 et 3500 g/mole.

10. Copolymère selon l'une des revendications précédentes, **caractérisé par le fait que** sa masse moléculaire moyenne en nombre est > 6000 g/mole, de préférence >10000g/mole, encore plus avantageusement >15000g/mole.

11. Procédé de préparation d'un copolymère tel que défini à l'une des revendications 1 à 10.

12. Article comprenant un copolymère selon l'une des revendications 1 à 10.

13. Article selon la revendication 12, **caractérisé par le fait qu'**il consiste en un article ou élément d'article de sport choisi parmi un élément de chaussure de sport, un ustensile de sport tel que patin à glace, fixation de skis, raquette, batte de sport, planche de sport de glisse, fer à cheval, palme, balle de golf, un article de loisirs, de bricolage, un outil ou équipement de voirie soumis aux agressions climatiques et mécaniques, un article de protection tel que visière de casque ou casquette, lunettes, branche de lunettes, un élément de véhicule, en particulier de scooter, cyclomoteur, moto, voiture, vélo, tel que protège-phare, rétroviseur, petite pièce de voitures tout terrain, réservoir, bande de courroie transporteuse.

14. Balle de golf selon la revendication 13, comprenant les parties suivantes:

- un coeur ;
- un revêtement externe et;
- éventuellement des couches intermédiaires entre ledit coeur et ledit revêtement externe, **caractérisée en ce qu'**au moins l'une de ces dites parties comprend au moins un copolymère selon l'une des revendications 1 à 10.

15. Utilisation du copolymère selon l'une des revendications 1 à 10 pour fabriquer un article à l'exclusion d'un adhésif thermofusible ou « hot melt adhesive ».

**Patentansprüche**

1. Segmentiertes Blockcopolymer der allgemeinen Formel:

$$(I) \qquad -[HB\text{-}WB]_n-$$

in der:

• HB oder harter Block eine Polymersequenz, die mindestens einen Polyamidblock (PA-Block) umfasst, ist,
• WB oder weicher Block eine Polymersequenz, die mindestens einen Polyetherblock (PE-Block) und mindestens einen Polyesterblock (PES-Block) umfasst, ist,
• n für die Zahl der -HB-WB-Einheiten des Copolymers steht, wobei n im Bereich von 1 bis zu einem Durchschnitt von 60 liegt,

**dadurch gekennzeichnet, dass** der Gewichtsprozentanteil der PA-Blöcke in dem Copolymer kleiner als 85 % ist, der Gewichtsanteil der PE-Blöcke in dem Copolymer streng größer als 15 % ist und die PES-Blöcke eine Glasübergangstemperatur $T_g$ von weniger als 10 °C aufweisen,
die PES-Blöcke aus der Polykondensation zwischen einem Diol und einer Dicarbonsäure mit Ausnahme von Terephthal- und Isophthalsäure stammen,
die Polyamidblöcke aus PA-6, PA-11 und PA-12 und PA-4,6-, PA-4,12-, PA-4,14-, PA-4,18-, PA-6,6-, PA-6,10-, PA-6,12-, PA-6,14-, PA-6,18-, PA-Pip10-, PA-9,6-, PA-9,12-, PA-10,10-, PA-10,12-, PA-10,14-, PA-10,18-, PA-6/11- und PA-11/12-Blöcken ausgewählt sind,
der PE-Block aus Polyethylenglykol (PEG), Propylenglykol (PPG), Polytrimethylenglykol (PO3G), Polytetramethylenglykol (PTMG), Poly-(3MeTHF) und blockartig oder statistisch aufgebauten Copolymeren davon ausgewählt ist,
es sich bei der Dicarbonsäure um eine dimerisierte Fettsäure handelt.

2. Copolymer nach Anspruch 1, **dadurch gekennzeichnet, dass** der Gewichtsprozentanteil der PE-Blöcke in dem Copolymer > 20 %, vorzugsweise > 30 %, vorteilhafterweise > 40 %, ist.

3. Copolymer nach Anspruch 1, **dadurch gekennzeichnet, dass** der Gewichtsprozentanteil der PA-Blöcke < 70 %, vorteilhafterweise < 50 %, noch vorteilhafter < 30 %, ist.

4. Copolymer nach einem der vorhergehenden Ansprüche, **dadurch gekennzeichnet, dass** die PES-Blöcke eine $T_g$ < 0 °C, vorzugsweise < -10 °C, vorteilhafterweise < -20 °C, noch vorteilhafter < -30 °C, aufweisen.

5. Copolymer nach einem der Ansprüche 1 bis 4, **dadurch gekennzeichnet, dass** die PA-Blöcke Carboxyl-Endgruppen aufweisen.

6. Copolymer nach einem der Ansprüche 1 bis 4, **dadurch gekennzeichnet, dass** die PA-Blöcke Amin-Endgruppen aufweisen.

7. Copolymer nach einem der vorhergehenden Ansprüche, **dadurch gekennzeichnet, dass** die zahlenmittlere Molmasse der Polyamidblöcke zwischen 500 und 10.000 g/mol, vorzugsweise zwischen 600 und 6000 g/mol, liegt.

8.  Copolymer nach einem der vorhergehenden Ansprüche, **dadurch gekennzeichnet, dass** die zahlenmittlere Molmasse der Polyetherblöcke zwischen 100 und 5000 g/mol, vorzugsweise zwischen 200 und 3000 g/mol, liegt.

9.  Copolymer nach einem der vorhergehenden Ansprüche, **dadurch gekennzeichnet, dass** die zahlenmittlere Molmasse der Polyesterblöcke zwischen 800 und 5000 g/mol, vorzugsweise zwischen 1000 und 3500 g/mol, liegt.

10. Copolymer nach einem der vorhergehenden Ansprüche, **dadurch gekennzeichnet, dass** seine zahlenmittlere Molmasse > 6000 g/mol, vorzugsweise > 10.000 g/mol, noch vorteilhafter > 15.000 g/mol, ist.

11. Verfahren zur Herstellung eines Copolymers gemäß einem der Ansprüche 1 bis 10.

12. Artikel, umfassend ein Copolymer nach einem der Ansprüche 1 bis 10.

13. Artikel nach Anspruch 12, **dadurch gekennzeichnet, dass** er aus einem Sportartikel oder Sportartikelelement, ausgewählt aus einem Sportschuhelement, einem Sportgerät wie einem Schlittschuh, einer Skibindung, einem Schläger, einem Gleitsportbrett, einem Hufeisen, einer Schwimmflosse, einem Golfball, einem Freizeitartikel oder einem Bastelartikel, einem Werkzeug oder einer Einrichtung für Verkehrswege, das bzw. die klimatischen oder mechanischen Belastungen ausgesetzt ist, einem Schutzartikel wie einem Helm- oder Kappenvisier, einer Brille, einem Brillenbügel, einem Element eines Fahrzeugs, insbesondere eines Motorrollers, eines Mofas, eines Motorrads, eines Autos oder eines Fahrrads,
wie einem Scheinwerferschutz, einem Rückspiegel, einem kleinen Teil für Geländefahrzeuge, einem Tank oder einem Förderband besteht.

14. Golfball nach Anspruch 13, der die folgenden Teile aufweist:

    - einen Kern;
    - eine äußeren Beschichtung und
    - gegebenenfalls Zwischenschichten zwischen dem Kern und der äußeren Beschichtung,

    **dadurch gekennzeichnet, dass** mindestens eines dieser Teile mindestens ein Copolymer nach einem der Ansprüche 1 bis 10 umfasst.

15. Verwendung des Copolymers nach einem der Ansprüche 1 bis 10 zur Herstellung eines Artikels mit Ausnahme eines Schmelzklebstoffs oder "Hot Melt Adhesive".

**Claims**

1.  Segmented block copolymer of general formula:

    (I)          -[HB - SB]$_n$-

    in which:

    •  HB or Hard Block is a polymeric sequence comprising at least one polyamide block (PA block);
    •  SB or Soft Block is a polymeric sequence comprising at least one polyether block (PE block) and at least one polyester block (PES block); and
    •  n represents the number of -HB-SB- units of said copolymer, n ranging from 1 up to an average of 60,

    **characterized in that** the weight percentage of PA blocks in the copolymer is less than 85%, the weight percentage of the PE blocks in the copolymer is strictly greater than 15% and that said PES blocks have a glass transition temperature Tg below 10°C, the PES blocks are derived from the polycondensation between a diol and a dicarboxylic acid, with the exception of terephthalic and isophthalic acids,
    the polyamide blocks are chosen from PA-6, PA-11 and PA-12 and PA-4,6, PA-4,12, PA-4,14, PA-4,18, PA-6,6, PA-6,10, PA-6,12, PA-6,14, PA-6,18, PA-Pip10, PA-9,6, PA-9,12, PA-10,10, PA-10,12, PA 10,14, PA-10,18, PA-6/11 and PA-11/12 blocks,
    the PE block is chosen from polyethylene glycol (PEG), propylene glycol (PPG), polytrimethylene glycol (PO3G), polytetramethylene glycol (PTMG), poly(3MeTHF) and block or random copolymers thereof,

the dicarboxylic acid is a dimerized fatty acid.

2. Copolymer according to Claim 1, **characterized in that** the weight percentage of the PE blocks in the copolymer is > 20%, preferably > 30%, advantageously > 40%.

3. Copolymer according to Claim 1, **characterized in that** the weight percentage of PA blocks is < 70%, advantageously < 50%, even more advantageously < 30%.

4. Copolymer according to one of the preceding claims, **characterized in that** the PES blocks have a Tg < 0°C, preferably < -10°C, advantageously < -20°C, even more advantageously < -30°C.

5. Copolymer according to one of Claims 1 to 4, **characterized in that** the PA blocks have carboxyl end groups.

6. Copolymer according to one of Claims 1 to 4, **characterized in that** the PA blocks have amine end groups.

7. Copolymer according to one of the preceding claims, **characterized in that** the number-average molecular weight of the polyamide blocks is between 500 and 10 000 g/mol, preferably between 600 and 6000 g/mol.

8. Copolymer according to one of the preceding claims, **characterized in that** the number-average molecular weight of the polyether blocks is between 100 and 5000 g/mol, preferably between 200 and 3000 g/mol.

9. Copolymer according to one of the preceding claims, **characterized in that** the number-average molecular weight of the polyester blocks is between 800 and 5000 g/mol, preferably between 1000 and 3500 g/mol.

10. Copolymer according to one of the preceding claims, **characterized in that** its number-average molecular weight is > 6000 g/mol, preferably > 10 000 g/mol, even more advantageously > 15 000 g/mol.

11. Method for preparing a copolymer as defined in one of Claims 1 to 10.

12. Article comprising a copolymer according to one of Claims 1 to 10.

13. Article according to Claim 12, **characterized in that** it consists of an article or component of sports equipment chosen from components of sports shoes, sports accessories such as ice skates, ski bindings, rackets, sports bats, boards for water or winter sports, horseshoes, fins, golf balls, recreational or do-it-yourself articles, highway tools or piece of equipment exposed to the weather and subject to mechanical abuse, a protective article such as visors for helmets or caps, glasses or side arms for glasses, vehicle components, in particular for a scooter, moped, motorbike, car or bicycle, such as headlight protectors, rear view mirrors, small components of all-terrain vehicles, tanks or conveyor belts.

14. Golf ball according to Claim 13, comprising the following parts:

- a core;
- an external coating; and
- optionally intermediate layers between said core and said external coating,

**characterized in that** at least one of these said parts comprises at least one copolymer according to one of Claims 1 to 10.

15. Use of the copolymer according to one of Claims 1 to 10 for manufacturing an article with the exception of a hot-melt adhesive.

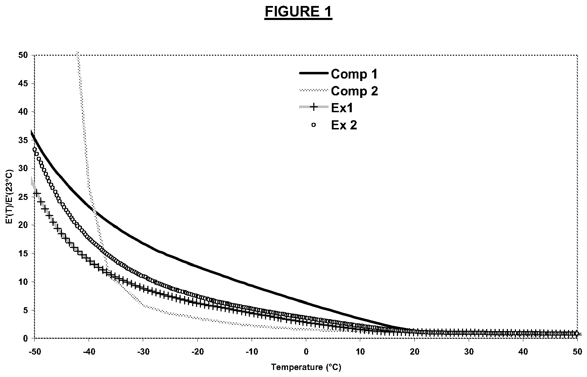

## FIGURE 1

## RÉFÉRENCES CITÉES DANS LA DESCRIPTION

**Documents brevets cités dans la description**

- US 20040158027 A
- US 5703177 A
- US 5253871 A
- FR 2273021
- US 4858924 A
- US 4919434 A
- US 6187864 B